# EUROPEAN PATENT APPLICATION

(11) **EP 4 730 520 A1**
(43) Date of publication of application: **22.04.2026**
(21) Application number: 24849457.7
(22) Date of filing: 24.07.2024
(51) Int. Cl.: H01M 50/24, H01M 50/251

(54) **BATTERY PACK AND ENERGY STORAGE SYSTEM**

(30) Priority: 02.08.2023 KR 20230101239; 19.07.2024 KR 20240095854
(71) Applicant: LG Energy Solution, Ltd., Seoul 07335 (KR)
(72) Inventor: CHO, Hyun, Daejeon 34122 (KR); OH, Sunghoon, Daejeon 34122 (KR); KIM, Kiyoun, Daejeon 34122 (KR); SHIN, Jongchan, Daejeon 34122 (KR); JEONG, Gyeongsu, Daejeon 34122 (KR); LEE, Seongju, Daejeon 34122 (KR)
(74) Representative: Plasseraud IP
(86) International application number: PCT/KR2024/010681
(87) International publication number: WO 2025/028888

(57) **Abstract**

A battery pack according an embodiment of the present disclosure includes a cell module assembly including a plurality of battery cells, and a pack case that houses the cell module assembly therein, wherein the pack case includes a drainage hole, and a filter unit is mounted to the drainage hole.

## Description

### [TECHNICAL FIELD]

### Cross Citation with Related Application(s)

This application claims the benefit of priority to Korean Patent Application No. 10-2023-0101239 filed on August 2, 2023 and Korean Patent Application No. 10-2024-0095854 filed on July 19, 2024, the disclosures of which are incorporated herein by reference in their entirety.

The present disclosure relate to a battery pack and an energy storage system, and more specifically, to a battery pack and an energy storage system having drainage, waterproof and dustproof performance.

### [BACKGROUND]

In modern society, as portable devices such as a mobile phone, a notebook computer, a camcorder and a digital camera, and an energy storage system(ESS) have been daily used, technologies of a field related thereto has been actively developed. In addition, as a secondary battery capable of being charged and discharged is used as a power source for an electric vehicle (EV), a hybrid electric vehicle (HEV), a plug-in hybrid electric vehicle (P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among these batteries, the lithium secondary battery has come into the spotlight because it has advantages, for example, being freely charged and discharged, and having very low self-discharge rate and high energy density.

Such secondary batteries are widely used in not only small devices such as portable electronic devices, but also medium- and large-scale devices such as electric vehicles and energy storage systems(ESS), and the use frequency thereof is rapidly increasing. Furthermore, in recent years, there is an increasing tendency to use residential battery packs for the purpose of storing electricity.

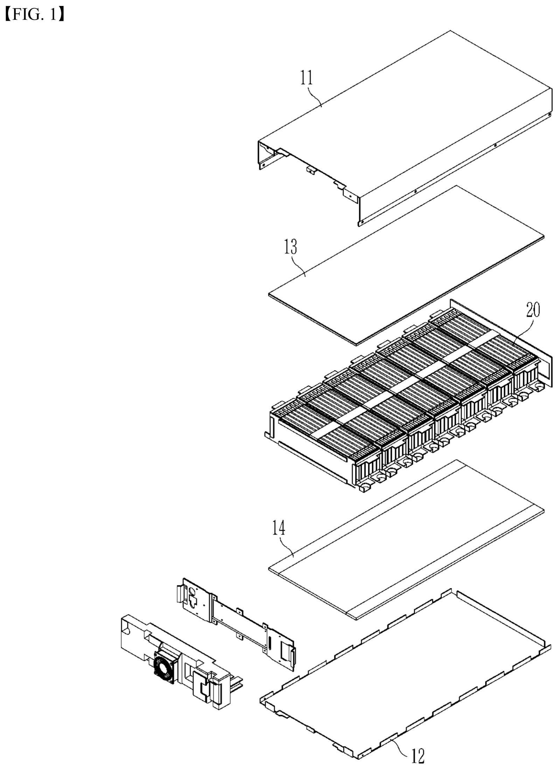

FIG. 1 shows an exploded perspective view of a battery pack according to a conventional art.

The battery pack according to FIG. 1 is configured such that a plurality of cell module assemblies 20 are stacked in the inside of a case in which an upper plate 11 and a lower plate 12 are coupled, and insulating plates 13 and 14 are further provided between the cell module assemblies 20 and the upper and lower plates 11 and 12. An insulating plate 14 is arranged on a lower plate 12, and a plurality of cell module assemblies 20 are stacked thereon. An insulating plate 13 is arranged on the plurality of cell module assemblies 20, and the plurality of cell module assemblies 20 are covered with an upper plate 11 thereon.

On the other hand, in a scenario in which the battery pack is embodied as an energy storage system (ESS) and placed outdoors in a house, if moisture or dust flows into a battery pack case, or moisture is generated due to condensation, etc., it is important to prevent such moisture or dust from affecting the performance of the battery cells.

### [DETAILED DESCRIPTION OF THE INVENTION]

### [Technical Problem]

It is an object of the present disclosure to provide a battery pack and an energy storage system having waterproof and dustproof performance.

However, the problem to be solved by embodiments of the present disclosure is not limited to the above-described problems, and can be variously expanded within the scope of the technical idea included in the present disclosure.

### [Technical Solution]

According to an embodiment of the present disclosure, there is provided a battery pack comprising: a cell module assembly including a plurality of battery cells; and a pack case that houses the cell module assembly therein, wherein the pack case includes a drainage hole, and a filter unit is mounted to the drainage hole.

The filter unit may include a filter body and a filter cover that covers the filter body, the drainage hole may include openings in the shape of a plurality of slits, and the filter cover may include openings in the shape of a plurality of slits.

The longitudinal direction of the slit of the drainage hole and the longitudinal direction of the slit of the filter cover may intersect each other.

The filter body may be seated on the plurality of slits of the drainage hole so as to be interposed between the drainage hole and the filter cover.

The filter body may filter external moisture, water, and dust entering through the drainage hole, but may discharge moisture inside the battery pack to the outside.

The filter body and the filter cover may be detachable from the drainage hole.

The filter cover may be coupled to the drainage hole by a hook-coupling.

The pack case may include a case body and a lower plate arranged at a lower part of the case body.

The upper surface of the lower plate may have an inclined surface that gradually decreases in height toward the drainage hole, and the height of the upper surface of the filter cover mounted to the drainage hole may be equal to or lower than the height of the upper surface of the lower plate.

The case body may include an open end at its lower end, and the lower plate is coupled to the open end so as to cover the open end.

The battery pack may further comprise a sealing member provided on a coupling surface of the case body and the lower plate.

The pack case may include a connector that is electrically connected between an external wire and an electric unit provided inside the battery pack, and the connector may be coupled to the pack case so that one end of the connector toward the outside of the pack case is directed downward from the horizontal direction.

The connector may be coupled to the pack case so as to be inclined downward as it goes from the inside of the pack case to an outside thereof.

The pack case may include a connector housing part that is formed to be recessed inward from the outer surface of the pack case, and the connector may be coupled to the connector housing part.

The connector may be a waterproof connector.

An energy storage system comprising the battery pack according to the above-mentioned embodiments can be provided.

### [Advantageous Effects]

According to the present disclosure, it is possible to easily discharge moisture generated inside the battery pack and the energy storage system, and to maximize waterproof, dustproof, or flameproof performance. Thereby, the quality of the battery pack and the energy storage system can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 shows an exploded perspective view of a battery pack according to a conventional art.
FIG. 2 is a perspective view of a battery pack according to an embodiment of the present disclosure.
FIG. 3 is an exploded perspective view of the battery pack of FIG. 2.
FIG. 4 shows a case where at least one cell module assembly is housed in the battery pack of FIG. 2.
FIG. 5 is an enlarged view of the lower plate of FIG. 2.
FIG. 6 is an exploded perspective view of the lower plate of FIG. 5.
FIG. 7 is a top view of the lower plate of FIG. 5.
FIG. 8 is a cross-sectional view of an inclined surface of the lower plate of FIG. 5.
FIG. 9 is an enlarged view of a drainage hole and a filter unit of the lower plate of FIG. 5.
FIG. 10 is an exploded perspective view of FIG. 9.
FIG. 11 shows an embodiment in which a filter unit is coupled to the drainage hole of the lower plate.
FIG. 12 is a cross-sectional view of a connector that can be provided in the pack case of the battery pack of FIG. 2.
FIG. 13 is a perspective view of a battery pack according to another embodiment of the present disclosure.
FIG. 14 is an exploded perspective view of the pack case of FIG. 13.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Below, exemplary embodiments of the present disclosure will be described with reference to the accompanying drawings.

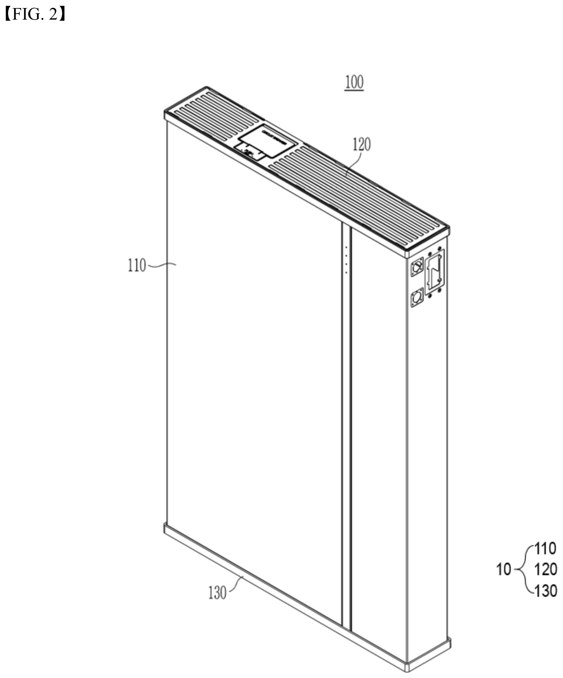

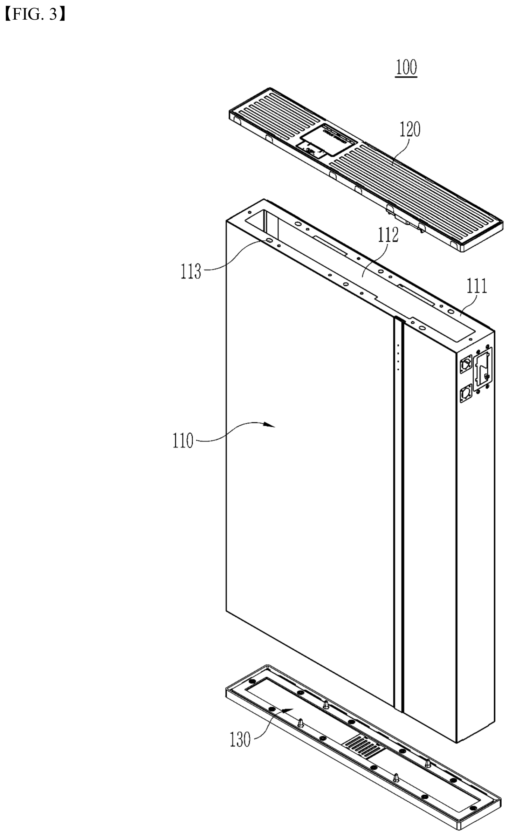

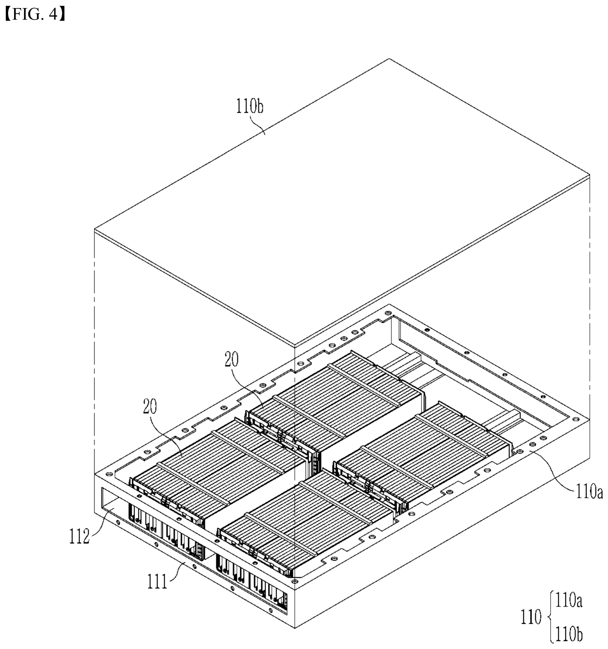

FIG. 2 is a perspective view of a battery pack according to an embodiment of the present disclosure. FIG. 3 is an exploded perspective view of the battery pack of FIG. 2. FIG. 4 shows a case where at least one cell module assembly is housed in the battery pack of FIG. 2.

A battery pack 100 according to an embodiment of the present disclosure roughly includes a pack case 10 and at least one cell module assembly 20 (see FIG. 4) housed in the pack case 10. The cell module assembly 20 includes a plurality of stacked battery cells. The pack case 10 may include a case body 110, an upper plate 120, and a lower plate 130. The case body 110 may be composed of a storage section 110a in which the cell module assembly 20 is stored, and a rear surface plate 110b that covers a rear surface of the storage section 110a. Meanwhile, the present disclosure is not limited to those shown in the exploded perspective view of FIG. 3, and is intended to over various modifications and changes, such as the upper plate 120 or the lower plate 130 being formed integrally with the case body 110.

At least one cell module assembly 20 is disposed inside the case body 110, and then an upper plate 120 and a lower plate 130 can be coupled to each of the open ends 112 (both open ends, e.g., upper and lower ends) of the case body 110. The open ends 112 of the case body 110 include an edge part 111 that supports the upper plate 120 and the lower plate 130 and allows the upper plate 120 and the lower plate 130 to be coupled with each other. The edge part 111 protrudes and extends from the case body 110 toward the opening of the open ends 112 (for example, perpendicularly) at each of the open ends 112 of the case body 110. The edge part 111 may be formed wholly or partially along the periphery of each of the open ends 112 of the case body 110. The upper plate 120 and the lower plate 130 are in contact with and fastened to each of the edge parts 111. The structure and shape of the edge part 111 are sufficient if they support the upper plate 120 and the lower plate 130 and allow the upper plate 120 and the lower plate 130 to be coupled with each other, without being particularly limited thereto.

The cell module assembly 20 also includes a plurality of stacked battery cells, and the battery cells may be pouch-shaped battery cells, but the present disclosure is not limited to those shown in the figure, and can be modified or changed and applied in various ways even when prismatic battery cells or cylindrical battery cells are stacked. Furthermore, the cell module assembly 20 may be provided in plural numbers as shown in FIG. 4 and mounted to the case body 110, but the present disclosure is not limited to those shown in the figure, and can be modified or changed and applied in various ways, such as being applicable even to a case in which one cell module assembly 20 is mounted to the case body 110 to form a battery pack 100.

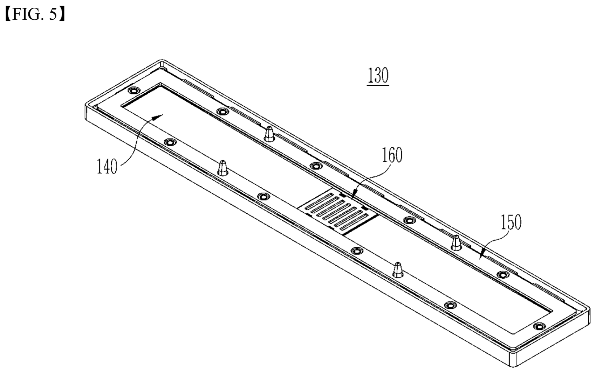

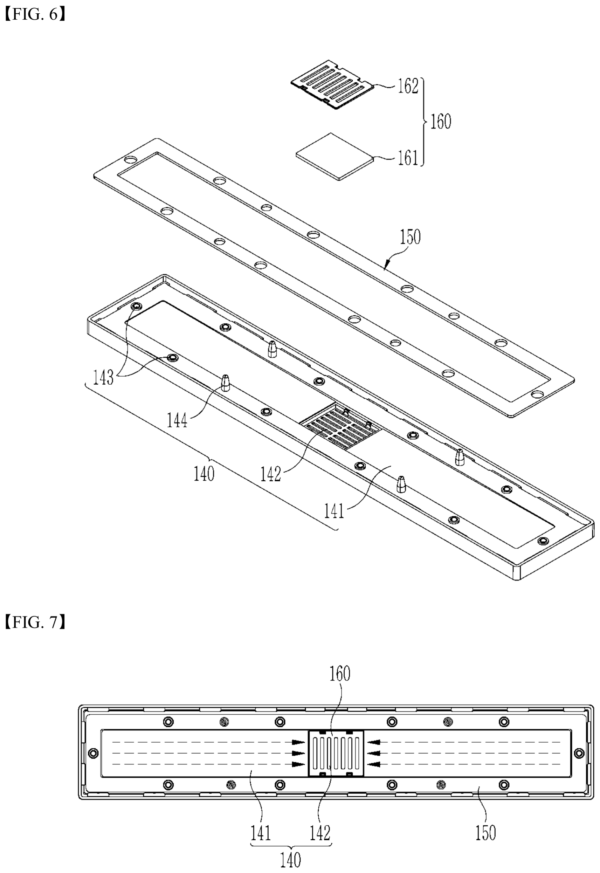

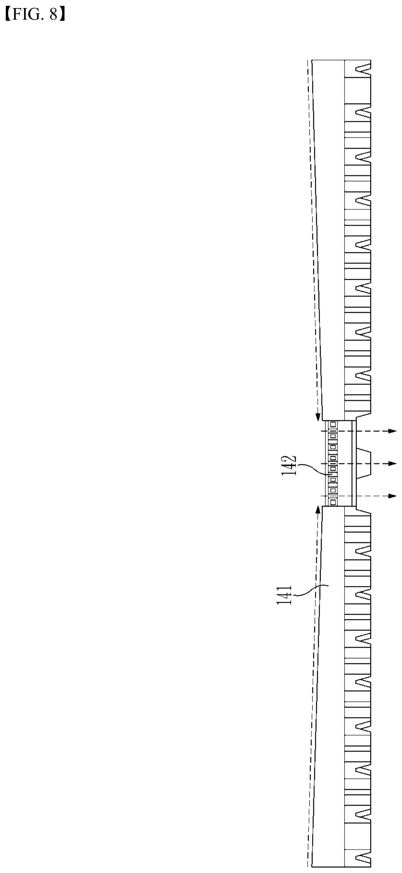

FIG. 5 is an enlarged view of the lower plate of FIG. 2. FIG. 6 is an exploded perspective view of the lower plate of FIG. 5. FIG. 7 is a top view of the lower plate of FIG. 5. FIG. 8 is a cross-sectional view of an inclined surface of the lower plate of FIG. 5.

First, referring to FIG. 5, the lower plate 130 includes a lower plate body 140, a sealing member 150, and a filter unit 160.

A sealing member 150 can be further provided on a coupling surface between the case body 110 and the lower plate 130 so as to prevent water or dust, etc. from flowing in the inside of the battery pack 100. The sealing member 150 may be mounted inside the lower plate 130 along the edge (border) of the lower plate 130.

The sealing member 150 is sufficient if it can eliminate a coupling tolerance between the case body 110 and the lower plate 130 at the time of coupling and has waterproof properties, and the type thereof is not limited. Additionally, it may have fire resistance and insulation properties. In this case, even if a flame or spark occurs in a battery cell inside the battery pack 100, the flame or spark can be prevented from being discharged to the outside of the battery pack 100 through a gap between the case body 110 and the lower plate 130. For example, the sealing member 150 may be made of a rubber or silicone. The sealing member 150 may further include a hole in a portion corresponding to the coupling part 143 of the lower plate 130. The sealing member 150 may also be similarly applied even to a coupling between the case body 110 and the upper plate 120.

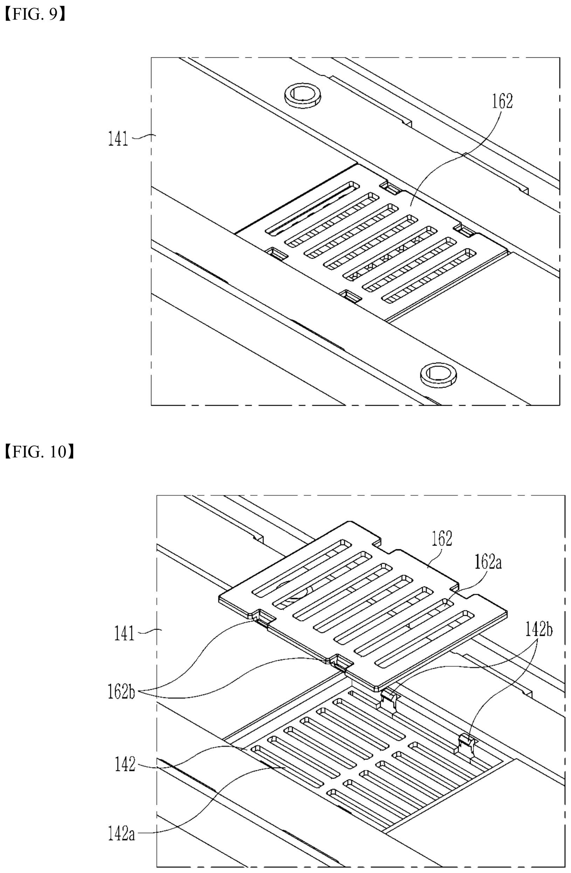

Meanwhile, a filter unit 160 may be mounted to the drainage hole 142 of the lower plate body 140 of the pack case 10, which will be described in detail later with reference to FIGS. 9 to 11.

Referring to FIG. 6, the lower plate body 140 of the pack case 10 includes a bottom surface 141, a drainage hole 142, a coupling part 143, and a guide member 144. Moisture present inside the battery pack 100 falls to the bottom surface 141 of the lower plate body 140. The lower plate body 140 includes a drainage hole 142 so that moisture or water condensed inside the battery pack 100 or unintentionally drawn into the battery pack 100 can be discharged to the outside of the battery pack 100.

The drainage hole 142 includes an opening consisting of a plurality of slits 142a. A filter unit 160 can be seated on the plurality of slits 142a of the drainage hole 142. The height of the upper surface of the drainage hole 142 is lower than the height of the bottom surface 141 of the lower plate body 140. The height of the upper surface of the filter unit 160 mounted to the drainage hole 142 is equal to or lower than the height of the bottom surface 141 of the lower plate body 140. Thereby, even if the filter unit 160 is mounted on the upper surface of the drainage hole 142, water can be smoothly discharged to the outside.

As shown in FIG. 7, water inside the battery pack 100 flows along the direction of the arrow on the bottom surface 141 and is discharged to the outside of the battery pack 100 through the drainage hole 142. At this time, as shown in FIG. 8, the bottom surface 141 has an inclined surface so that water can flow well toward the drainage hole 142. At this time, the bottom surface 141 becomes lower in height as it goes toward the drainage hole 142. The drainage hole 142 may be arranged at the center part of the lower plate body 140, but the present disclosure is not limited to those shown in the figure, and is sufficient if it is provided in the lower plate body 140. When the drainage hole 142 is provided at the center part of the lower plate body 140 or at a position close thereto, the upper surface of the bottom surface 141 becomes lower in height as it goes from the edge to the drainage hole 142 side.

Referring again to FIG. 6, the lower plate 130 is formed with a plurality of coupling parts 143. The coupling parts 143 of the lower plate 130 may be provided in the shape of through holes or recessed parts. The coupling parts 143 of the lower plate 130 may be formed, for example, along the periphery of the lower plate 130. A plurality of coupling parts 113 (see FIG. 3) are also formed on the edge part 111 of the case body 110. The coupling parts 113 of the case body 110 may be provided in the shape of through holes or recessed parts. The coupling parts 113 of the case body 110 may be formed at predetermined intervals along the edge part 111.

The coupling parts 143 of the lower plate 130 and the coupling parts 113 provided in plural numbers on the edge part 111 of the case body 110 are provided at positions corresponding to each other in a one-to-one relationship. The coupling parts 143 of the lower plate 130 and the coupling parts 113 of the case body 110 are arranged in mutually aligned states. Thereby, when the case body 110 and the lower plate 130 are coupled, the coupling parts 113 of the case body 110 and the coupling parts 143 of the lower plate 130 are arranged at the same position and can be fastened by a fastening member (not shown). The fastening member may be a bolt-nut, which may be fastened in various ways. In some cases, a female screw thread may be provided on the coupling parts 113 of the case body 110 and the coupling parts 143 of the lower plate 130, so that a male screw bolt may be fastened. In addition, the number, arrangement, and spacing of the coupling parts 113 of the case body 110 and the coupling parts 143 of the lower plate 130 are not limited to those shown in FIGS. 6 and 7, and it is sufficient if the case body 110 and the lower plate 130 can be fastened, and various modifications and changes are possible.

The battery pack 100 according to an embodiment of the present disclosure further includes a guide member 144. The guide member 144 allows for temporary assembly (temporary coupling) between corresponding components (members) before they are fastened to each other. For example, as shown in FIG. 7, the guide member 144 allows the case body 110 and the lower plate 130 to be temporarily assembled before the case body 110 and the lower plate 130 are fastened with a fastening member. The guide member 144 is arranged at a part of the coupling parts 113 of the case body 110 or at a part of the coupling parts 143 of the lower plate 130, so that the case body 110 and the lower plate 130 can be temporarily assembled. Meanwhile, the shape and structure of the guide member 144 of the present disclosure are not limited to those described above, and those that can be used for temporary assembly are sufficient, and can be modified or changed and applied in various ways.

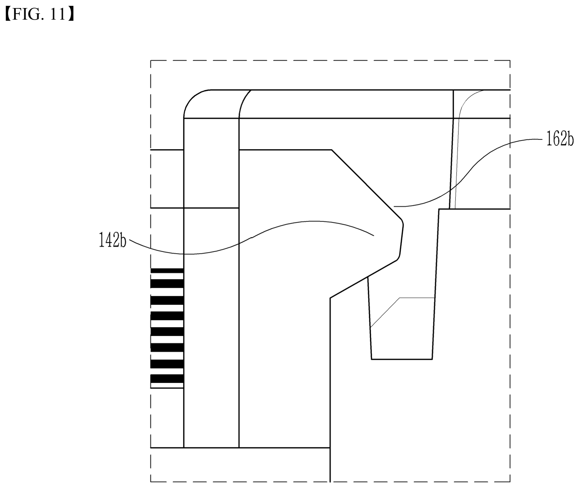

FIG. 9 is an enlarged view of a drainage hole and a filter unit of the lower plate of FIG. 5. FIG. 10 is an exploded perspective view of FIG. 9. FIG. 11 shows an embodiment in which a filter unit is coupled to the drainage hole of the lower plate.

First, referring again to FIG. 6, the filter unit 160 includes a filter body 161 and a filter cover 162 for fixing the filter body 161. Such a filter unit 160 is mounted to the drainage hole 142 having an open shape. The drainage hole 142 includes openings in the shape of plural slits 142a, which prevents the inflow of foreign substances from the outside, and allows the filter unit 160 to be seated thereon.

The filter unit 160 can be mounted in a detachable manner. Therefore, the filter body 161 or the filter cover 162 can be replaced as necessary. While filtering external moisture, water, dust, etc. entering through the drainage hole 142 in the filter body 161, moisture inside the battery pack 100 can be discharged to the outside by gravity. Furthermore, the filter body 161 can prevent external moisture or small water droplets splashing from the bottom surface (ground, etc.) on which the battery pack 100 is mounted from entering the inside of the battery pack 100, while moisture inside the battery pack 100 condenses into liquid and collects in the drainage hole 142 along the bottom surface 141 of the lower plate body 140, so that it can pass through the filter body 161 and be discharged to the outside.

Additionally, when a flame or the like occurs inside the battery pack 100, the filter body 161 can block the flame or spark, etc., and prevent them from being exposed to the outside. The filter body 161 applied to the present disclosure can be, for example, a porous filter, and is sufficient if it has dustproof, waterproof and flameproof performance, and filter bodies 161 of various structures and materials can be adopted. Alternatively, the filter body 161 may be composed of plural layers although not shown in the present disclosure, and each may be at least one of a dustproof filter, a waterproof filter, and a flameproof filter. In this case, a mesh filter may also be included.

Referring to FIGS. 9 and 10, the filter cover 162 covers the upper part of the filter body 161 (see FIG. 6), thereby allowing the filter body 161 to be fixed to the drainage hole 142. In FIGS. 9 and 10, the filter body 161 is omitted for convenience of understanding. The filter cover 162 can be coupled to the drainage hole 142 by a hook-coupling as described below.

The filter cover 162 also includes openings in the shape of plural slits 162a. This can block foreign substances such as insects and stones from the outside and prevent them from entering the inside of the battery pack 100. In addition, the drainage hole 142 also includes an opening in the shape of plural slits 142a.

The direction of the plurality of slits 142a of the drainage hole 142 (the longitudinal direction of each slit) and the direction of the plurality of slits 162a of the filter cover 162 (the longitudinal direction of each slit) intersect with each other. Therefore, the plurality of slits 142a of the drainage hole 142 and the plurality of slits 162a of the filter cover 162 are coupled with each other to form a single mesh shape. For example, as shown in FIGS. 9 and 10, the direction of the plurality of slits 142a of the drainage hole 142 and the direction of the plurality of slits 162a of the filter cover 162 may be orthogonal to each other. Meanwhile, the direction of the plurality of slits 142a of the drainage hole 142 and the direction of the plurality of slits 162a of the filter cover 162 are not limited to those shown in the present disclosure, and various modifications and changes are possible.

Further, the edge of the drainage hole 142 includes a hook 142b, and the edge of the filter cover 162 also includes a hook ring 162b. Also, the hook 142b of the drainage hole 142 and the hook ring 162b of the filter cover 162 are provided at positions corresponding to each other. Therefore, the drainage hole 142 and the filter cover 162 can be coupled in a detachable manner. FIG. 11 shows an enlarged view for the case where the hook 142b of the drainage hole 142 is coupled to the hook ring 162b of the filter cover 162. A set of the hook 142b of the drainage hole 142 and the hook ring 162b of the filter cover 162 can be provided in plural numbers, and the hook and the hook ring can be arranged in reverse. The number and arrangement of the hook coupling are not limited to those shown in the present disclosure, and various modifications and changes are possible. In addition to the hook coupling, various coupling methods can be applied as long as the filter cover 162 can be detachably provided on the drainage hole 142.

According to the above-described embodiment of the present disclosure, it is possible to easily discharge moisture generated inside the battery pack and the energy storage system, and to maximize waterproof, dustproof, or flameproof performance. Thereby, the quality of the battery pack and the energy storage system can be improved.

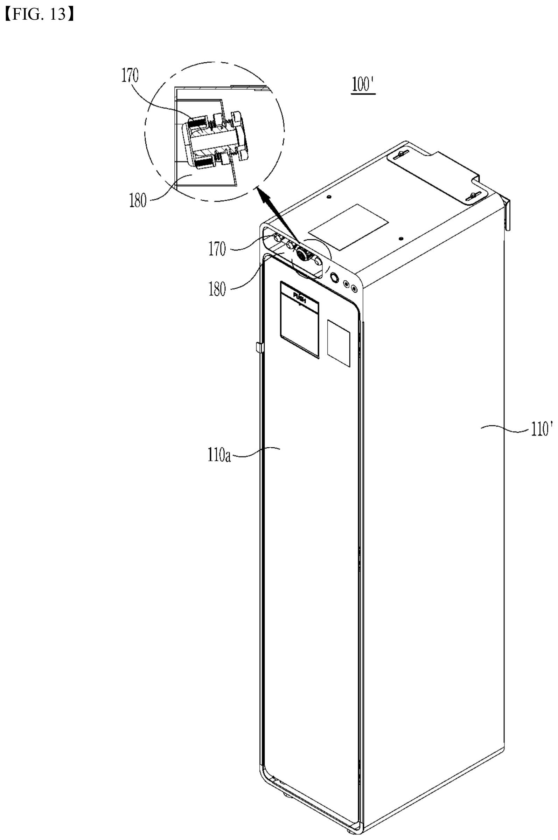

Meanwhile, in the above-described embodiments of the present disclosure, an embodiment has been described in which the pack case 10 includes the case body 110, the upper plate 120, and the lower plate 130, and the drainage hole 142 and the filter unit 160 are provided on the lower plate 130. However, the present disclosure is not limited to those described above, and the detailed components of the pack case 10 can be divided and realized in various ways, and for example, they can be realized in the manner shown in FIG. 13. In this case, it is sufficient if the drainage hole 142 and the filter unit 160 may be embodied so as to be provided on the lower surface of the pack case 10.

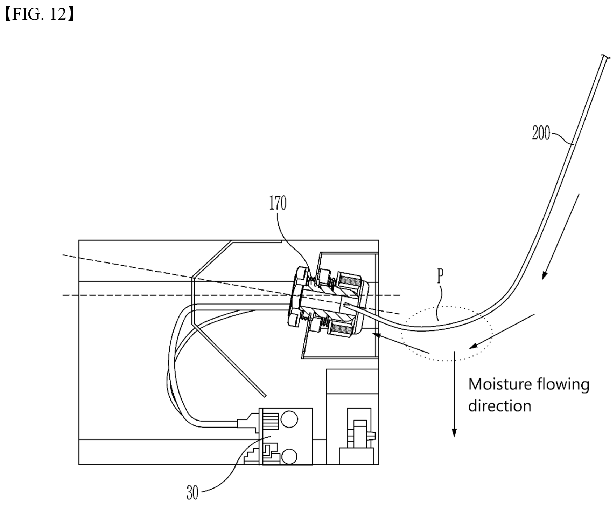

FIG. 12 is a cross-sectional view of a connector that can be provided in the pack case of the battery pack of FIG. 2.

First, the pack case 10 of the battery pack 100 of FIG. 2 may further include an electric unit 30 therein. The electric unit 30 includes various electric components that can manage or control the cell module assembly, and may include, for example, a BMS (Battery Management System) and various cables. For the electric unit 30, refers to an electric unit provided in a typical battery pack, and FIG. 12 shows some examples of the electric unit 30, and it should be noted that the embodiments according to the present disclosure are not limited to those shown in the figure.

A connector 170 that electrically connects between the electric unit 30 provided inside the battery pack 100 and the external wire 40 outside the battery pack 100 may be provided in the pack case 10. An external wire 40 is electrically connected to one end of the connector 170 (the end toward the outside of the battery pack). Similarly, the other end of the connector 170 (the end toward the inside of the battery pack) is electrically connected to the electric unit.

One end of the connector 170 (the end toward the outside of the battery pack) is arranged so as to be directed downward from the horizontal direction. The connector 170 may be arranged so as to be inclined downward as it goes from the inside of the pack case 10 to an outside thereof.

Therefore, the point having the lowest height of the external wire 40, i.e., the lowest point P, is formed on the outside of the connector 170. More preferably, the lowest point P of the connector 170 is formed on the outside of the battery pack 100. Moisture due to external snow, rain, etc. may flow along the external wire 40, and as shown in FIG. 12, the moisture flowing along the external wire 40 is prevented from being drawn into the connector 170. This prevents moisture flowing along the external wire 40 from affecting the electric unit 30 provided inside the battery pack 100, such as causing a short circuit.

The connector 170 may be a waterproof connector (gland). The connector 170 is not specifically shown in FIG. 2, but may be provided on at least one of the four sides of the front, rear, left, and rear sides of the pack case 10 of the battery pack of FIG. 2.

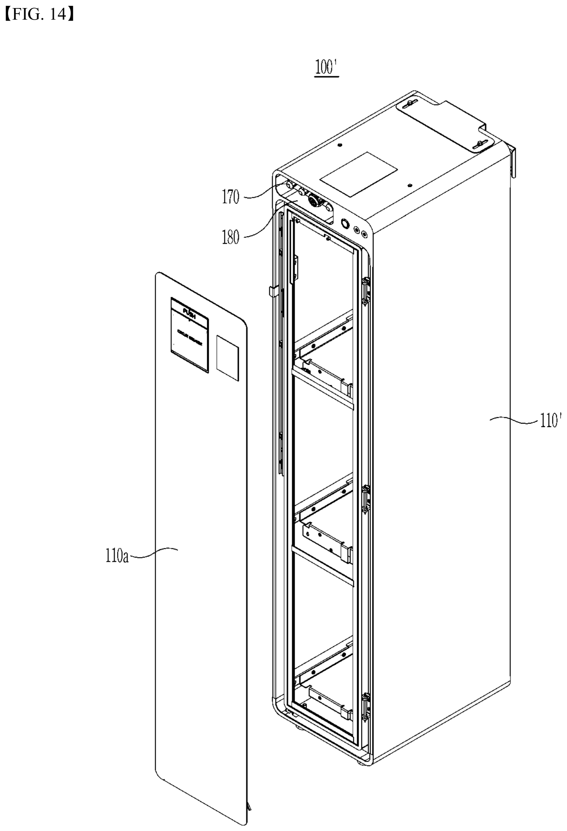

FIG. 13 is a perspective view of a battery pack according to another embodiment of the present disclosure. FIG. 14 is an exploded perspective view of the pack case of FIG. 13.

The battery pack 100' according to the embodiment of FIG. 13 shows a modified shape and structure of the pack case 10' in the battery pack 100 of FIG. 2. The pack case 10' may comprise a case body 110' and a door 110a' provided on one surface of the case body 110'. FIG. 14 shows the case body 110' and the door 110a' in an exploded view. As shown in FIG. 14, the door 110a' is integrally separable from the case body 110' as a single unit, and in some cases, one end of the door 110a' may be hinge-coupled to the case body 110'.

The pack case 10' in FIG. 13 may further include a connector housing part 180 formed to be recessed inward from the outer surface provided on one surface of the pack case 10'. The connector 170 is mounted to the connector housing part 180, so that the connector housing part 180 may act as an eaves to protect the connector 170, and may prevent the connector 170 from being directly exposed to external snow, rain, wind, etc.

As can be seen in the enlarged cross-sectional view of the connector 170 and the connector housing part 180 of FIG. 13, one end of the connector 170 (the end toward the outside of the battery pack) is arranged to be directed downward rather than in the horizontal direction. The connector 170 may be arranged to be inclined downward as a whole from the inside of the pack case 10' toward the outside.

A more specific description of the battery pack 100' of FIG. 13 overlap with those described above for the battery pack 100 of FIGS. 2 to 12, so refer to those described above in FIGS. 2 to 12.

A battery pack according to an embodiment of the present disclosure can be applied to various devices. For example, the device to which the battery pack is applied may be a vehicle means such as an electric bicycle, an electric vehicle, or a hybrid vehicle. However, the above-described device is not limited thereto, and the battery pack according to the present embodiment can be used in various devices in addition to the above-described examples, the battery pack according to the present embodiment can be used in various devices, which also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [DESCRIPTION OF REFERENCE NUMERALS]

10, 10': pack case
20: cell module assembly
30: electric unit
40: external wire
100, 100': battery pack
110, 110': case body
111: edge part
112: open end
113: coupling part
110a: door
120: upper plate
130: lower plate
140: lower cover body
141: bottom surface
142: drainage hole
142a: slit
142b: hook
143: coupling part
144: guide member
150: sealing member
160: filter unit
161: filter body
162: filter cover
162a: slit
162b: hook ring
170: connector
180: connector housing part

## Claims

1. A battery pack comprising:
a cell module assembly including a plurality of battery cells; and
a pack case that houses the cell module assembly therein,
wherein the pack case includes a drainage hole, and a filter unit is mounted to the drainage hole.

2. The battery pack according to claim 1, wherein:
the filter unit includes a filter body and a filter cover that covers the filter body, and
the drainage hole includes openings in the shape of a plurality of slits, and the filter cover includes openings in the shape of a plurality of slits.

3. The battery pack according to claim 2, wherein:
the longitudinal direction of the slit of the drainage hole and the longitudinal direction of the slit of the filter cover intersect each other.

4. The battery pack according to claim 2, wherein:
the filter body is seated on the plurality of slits of the drainage hole so as to be interposed between the drainage hole and the filter cover.

5. The battery pack according to claim 1, wherein:
the filter body filters external moisture, water, and dust entering through the drainage hole, but discharges moisture inside the battery pack to the outside.

6. The battery pack according to claim 1, wherein:
the filter body and the filter cover are detachable from the drainage hole.

7. The battery pack according to claim 1, wherein:
the filter cover is coupled to the drainage hole by a hook-coupling.

8. The battery pack according to claim 1, wherein:
the pack case includes a case body and a lower plate arranged at a lower part of the case body.

9. The battery pack according to claim 8, wherein:
the upper surface of the lower plate has an inclined surface that gradually decreases in height toward the drainage hole, and
the height of the upper surface of the filter cover mounted to the drainage hole is equal to or lower than the height of the upper surface of the lower plate.

10. The battery pack according to claim 8, wherein:
the case body includes an open end at its lower end, and the lower plate is coupled to the open end so as to cover the open end.

11. The battery pack according to claim 10,
further comprising a sealing member provided on a coupling surface of the case body and the lower plate.

12. The battery pack according to claim 1, wherein:
the pack case includes a connector that is electrically connected between an external wire and an electric unit provided inside the battery pack, and
the connector is coupled to the pack case so that one end of the connector toward the outside of the pack case is directed downward from the horizontal direction.

13. The battery pack according to claim 12, wherein:
the connector is coupled to the pack case so as to be inclined downward as it goes from the inside of the pack case to an outside thereof.

14. The battery pack according to claim 12, wherein:
the pack case includes a connector housing part that is formed to be recessed inward from the outer surface of the pack case, and
the connector is coupled to the connector housing part.

15. The battery pack according to claim 12, wherein:
the connector is a waterproof connector.

16. An energy storage system comprising the battery pack according to claim 1.
